# EUROPÄISCHE PATENTSCHRIFT

(11) **EP 2 071 934 B1**
(45) Veröffentlichungstag und Bekanntmachung des Hinweises auf die Patenterteilung: **28.12.2011**
(21) Anmeldenummer: 08170339.9
(22) Anmeldetag: 01.12.2008
(51) Int. Cl.: A01D 43/08

(54) **Maschine zur Ernte stängelartiger Pflanzen**
Machine for harvesting stalk-like plants
Machine destinée à la récolte de plantes de type à tiges

(30) Priorität: 22.12.2007 DE 102007062455
(43) Veröffentlichungstag der Anmeldung: 24.06.2009
(73) Patentinhaber: Maschinenfabrik Kemper GmbH & Co. KG, 48973 Stadtlohn (DE)
(72) Erfinder: Rickert, Clemens, 49683, Ahaus (DE); Grobmeier, Jens, 48703, Stadtlohn (DE); Hüning, Martin, 48727, Billerbeck (DE); Schulze Hockenbeck, Leo, 48351, Everswinkel (DE); Weitenberg, Klemens, 46325, Borken (DE)
(74) Vertreter: Holst, Sönke

(56) Entgegenhaltungen:
- EP-A- 0 448 844
- EP-A- 0 502 653
- EP-A- 0 504 639
- EP-A- 0 673 594
- NL-A- 6 810 919

## Beschreibung

Die Erfindung betrifft eine Maschine zur Ernte stängelartiger Pflanzen mit einer um eine gegenüber der Vertikalen in Vorwärtsrichtung nach vorn geneigte Achse in Drehung versetzbaren Schneideinrichtung zum Abschneiden von Pflanzenstängeln, die einen mittels eines Antriebs um die Achse in Drehung versetzbaren, mittigen Haltering und wenigstens ein an einem Flansch des Halterings lösbar befestigtes Schneidmesser umfasst, welches sich in einer in eine Schneidkante auslaufenden Ebene erstreckt, und einer über der Schneideinrichtung angeordneten Fördereinrichtung zur Aufnahme und Abförderung der abgeschnittenen Pflanzenstängel.

### Stand der Technik

In der DE 195 31 918 A wird eine für die Ernte von stängelartigen Pflanzen, wie Mais, geeignete Maschine zur Anbringung an einem Feldhäcksler beschrieben, die mehrere quer zur Vorwärtsrichtung, in der die Maschine beim Erntebetrieb über ein Feld bewegt wird, angeordnete Mäh- und Einzugseinrichtungen aufweist. Die Mäh- und Einzugseinrichtungen umfassen eine untere Schneidscheibe in der Art eines Kreissägemessers und darüber angeordnete Förderscheiben mit Aussparungen zur Aufnahme von Pflanzen. Die Schneidscheiben werden mit höherer Geschwindigkeit als die Förderscheiben in Drehung versetzt. Die mittels der Schneidscheiben von den im Boden verbleibenden Stoppeln getrennten Pflanzen werden durch die Förderscheiben angenommen und durch die Förderscheiben und in den Zwickelbereichen zwischen den Förderscheiben angeordnete Querfördertrommeln an den Rückseiten der Mäh- und Einzugseinrichtungen zur Mitte der Maschine transportiert und an einen Einzugskanal eines Feldhäckslers übergeben.

Die Schneidscheiben und die Förderscheiben der einzelnen Mäh- und Einzugseinrichtungen sind in sich flach und koaxial zueinander angeordnet. Im Erntebetrieb wird die Maschine mittels eines Aktors, der den Einzugskanal des Feldhäckslers und die daran angebrachte Maschine um die Achse der Häckseltrommel verschwenkt, in eine derartige Winkelstellung gebracht, dass die Drehachsen der Schneidscheiben und der Förderscheiben gegenüber der Vertikalen leicht nach vorn geneigt sind. Gebräuchliche Winkel betragen etwa 10°. Die Schneidscheibe liegt demnach in einer nach vorn und unten abfallenden Ebene. Die oberen Teile der Pflanzenstängel werden daher beim Abschneiden geringfügig angehoben, wenn die Schneidscheibe sie von den im Boden verbleibenden Stümpfen abtrennt, da sie auf der Oberseite der Schneidscheibe entlang gleiten. Gleichzeitig wird der abgeschnittene Pflanzenstängel durch die Drehung der Schneidscheibe in Umfangsrichtung bzw. tangentialer Richtung beschleunigt und mitgeführt. Diese Bewegung des Stängels in Umfangsrichtung erschwert jedoch das Einlaufen des Pflanzenstängels in den Boden der Aussparung der Förderscheibe, was mitunter zu fehlerhafter Aufnahme der Pflanzen in den Förderscheiben und zu Pflanzenverlusten führen kann.

Aufgabe der Erfindung

Die der Erfindung zu Grunde liegende Aufgabe wird darin gesehen, eine Maschine zur Ernte stängelartiger Pflanzen mit einer Schneideinrichtung und einer darüber angeordneten Fördereinrichtung zur Aufnahme und Abförderung von Pflanzenstängeln bereitzustellen, bei der die Annahme von Pflanzen durch die Fördereinrichtung gegenüber dem Stand der Technik verbessert ist.

Diese Aufgabe wird erfindungsgemäß durch die Lehre des Patentanspruchs 1 gelöst, wobei in dem weiteren Patentanspruch Merkmale aufgeführt sind, die die Lösung in vorteilhafter Weise weiterentwickeln.

Eine in einer Vorwärtsrichtung über ein Feld bewegbare Maschine zur Ernte stängelartiger Pflanzen umfasst eine Schneideinrichtung zum Abschneiden von Pflanzen von den im Erdboden verbleibenden Stümpfen und eine über der Schneideinrichtung angeordnete Fördereinrichtung zur Aufnahme und Abförderung der abgeschnittenen Pflanzenstängel. Die Schneideinrichtung ist um eine Achse in Drehung versetzbar. Die erwähnte Achse ist in an sich bekannter Weise in der Vorwärtsrichtung nach vorn geneigt. Zur drehbaren Anbringung eines Schneidmessers der Schneideinrichtung um die nach vorn geneigte Achse dient ein mittiger Haltering, der innen mit einer drehbar antreibbaren Welle verbunden ist und außen an einem Flansch ein einziges Schneidmesser oder mehrere, in Umfangsrichtung aufeinander folgende Schneidmesser trägt. Wegen der gegenüber der Vertikalen nach vorn gerichteten Neigung der Achse und einer nach vorn ansteigenden Anordnung der mit den Pflanzen zusammenwirkenden Bereiche der Schneideinrichtung ist die Form der Schneidmesser konisch. Das Schneidmesser erstreckt sich in seiner während des normalen Erntebetriebs eingenommenen Stellung in einer Ebene, die sich vom Flansch ausgehend nach außen und oben erstreckt ?sei es schräg oder in Stufen. Diese Ebene läuft in einer Schneidkante aus, die zum Abschneiden der Pflanzen dient. Der Schnitt der Pflanzen erfolgt somit mittels der Schneidkante, welcher - vom Standpunkt der Pflanze aus betrachtet - die hinter der Schneidkante absinkende Ebene folgt.

Auf diese Weise kann der Pflanzenstängel nach dem Schneidvorgang zunächst geringfügig absinken und hat hinreichend Zeit, um tiefer in die Fördertaschen oder Aussparungen der Fördereinrichtung einzudringen. Man erreicht eine bessere Annahme und Führung der Pflanzen, da ihre unteren Enden sich in einer durch die geneigte Ebene der Schneidkante definierten Vertiefung befinden.

Die Fördereinrichtung kann in an sich bekannter Weise mehrere übereinander angeordnete Förderscheiben mit um ihren Umfang verteilten Ausbuchtungen oder Fördertaschen umfassen, die mittels eines Antriebs um eine koaxial zur Achse der Schneideinrichtung verlaufende Achse in Drehung versetzbar sind. Bei einer anderen Ausführungsform finden als Fördereinrichtung mehrere übereinander angeordnete Förderketten mit nach außen abstehenden Mitnehmern Verwendung, die um zwei oder mehr Achsen umlaufen.

### Ausführungsbeispiel

In den Zeichnungen ist ein nachfolgend näher beschriebenes Ausführungsbeispiel der Erfindung dargestellt. Es zeigt:
Fig. 1 eine Draufsicht auf eine Maschine zur Ernte stängelartiger Pflanzen, und
Fig. 2 einen Schnitt durch die Maschine entlang der Linie 2-2.

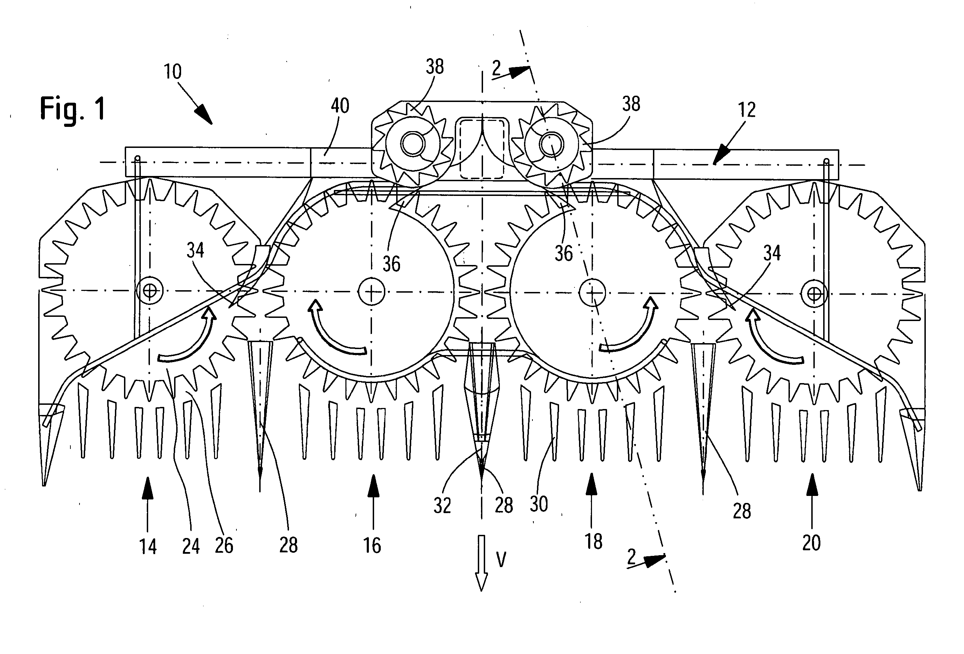

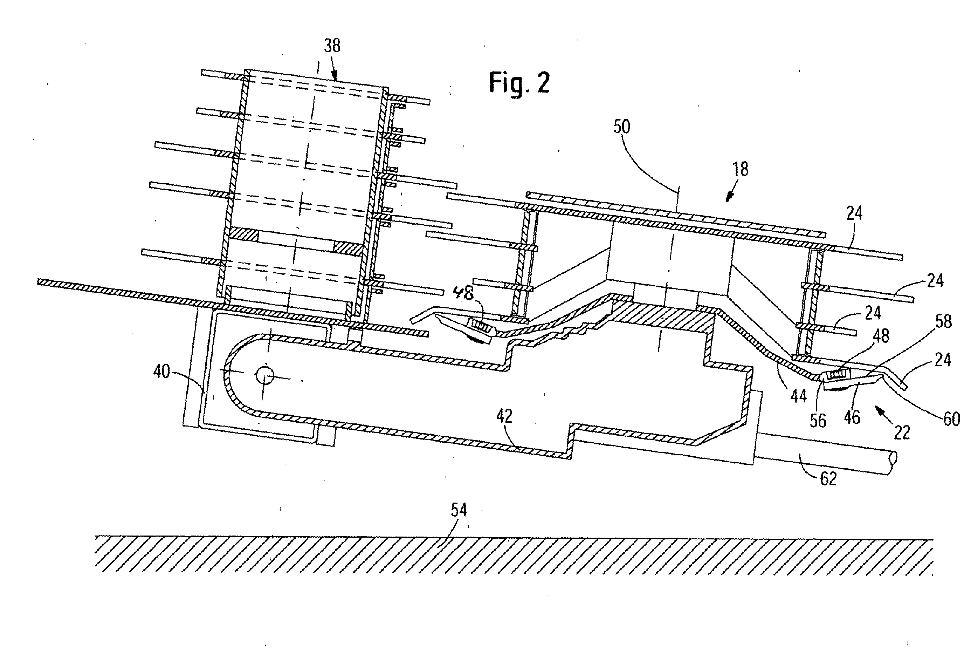

An einem Tragrahmen 12 einer in der Figur 1 in einer Draufsicht dargestellten Maschine 10 zur Ernte stängelartiger Pflanzen sind seitlich nebeneinander vier Mäh- und Einzugseinrichtungen 14, 16, 18, 20 befestigt. Die Mäh- und Einzugseinrichtungen 14 bis 20 setzen sich jeweils aus einer unteren, in Drehung versetzbaren Schneideinrichtung 22 (s. Figur 2) und mehreren koaxial darüber angeordneten, in Drehung versetzbaren, als Fördereinrichtung dienenden Förderscheiben 24 zusammen. Die Schneidscheiben 22 sind am Rand mit einer Schneidkante 60 versehen, die mit scharfen Zähnen ausgestattet oder anderweitig geschärft ist, um die Pflanzenstängel von den im Boden verbleibenden Stoppeln abzutrennen. Die Stängel finden in Ausbuchtungen 26 der Förderscheiben 24 Aufnahme und werden wie unten beschrieben zu einem die Maschine 10 tragenden und ihre beweglichen Elemente antreibenden und die Maschine 10 in einer Vorwärtsrichtung V über ein Feld bewegenden Feldhäcksler (nicht gezeigt) transportiert.

Zwischen den Mäh- und Einzugseinrichtungen 14 bis 20 befinden sich jeweils Stängelteiler 28, um die Pflanzen seitlich abzulenken und in den Eingriffsbereich der Mäh- und Einzugseinrichtungen 14 bis 20 zu verbringen, wenn erforderlich. An den Vorderseiten der Mäh- und Einzugseinrichtungen 14 bis 20 sind kleinere Stängelteiler 30 angeordnet. Die Arbeitsbreite der Mäh- und Einzugseinrichtungen 14 bis 20 entspricht jeweils zwei Reihen, d. h. etwa 1,5 m. Die Maschine 10 kann somit 8 im Abstand von 75 cm gesäte Reihen Mais gleichzeitig ernten. Durch andere Dimensionierung und/oder Anzahlen der Mäh- und Einzugseinrichtungen 14 bis 20 kann auch eine beliebige andere Arbeitsbreite erzielt werden.

Beim Erntebetrieb drehen sich die Mäh- und Einzugseinrichtungen 14 bis 20 in den durch die Pfeile angedeuteten Richtungen. Die der Längsmittelebene 32 benachbarten, inneren Mäh- und Einzugseinrichtungen 16, 18 fördern die Pflanzen somit zunächst nach außen und nach hinten, während die äußeren Mäh- und Einzugseinrichtungen 14, 20 sich zu den ihnen jeweils benachbarten Mäh- und Einzugsrichtungen 16, 18 gegensinnig drehen. Wie anhand der Figur 1 erkennbar ist, übergeben die äußeren Mäh- und Einzugseinrichtungen 14, 20 ihr Erntegut etwa in der Mitte zwischen den Drehachsen der Mäh- und Einzugseinrichtungen 14, 16 bzw. 18, 20 an die inneren Mäh- und Einzugseinrichtungen 18, 20, wozu Ausräumer 34 vorgesehen sind. An der Rückseite der inneren Mäh- und Einzugseinrichtungen 16, 18 wird das Erntegut durch weitere Ausräumer 36 aus den Ausbuchtungen 26 herausgehoben und an Fördertrommeln 38 übergeben, die um leicht nach vorn geneigte Achsen rotieren und den Höhenunterschied zwischen dem Boden der Maschine 10 und den nachfolgenden Einzugswalzen des Einzugskanals des Feldhäckslers überwinden.

Die Figur 2 zeigt einen Schnitt durch die Maschine 10 entlang der Linie 2-2 der Figur 1. Ein hohler Querträger 40 des Tragrahmens 12 trägt Getriebegehäuse 42, an denen jeweils eine Mäh- und Einzugseinrichtung 18 abgestützt ist, und von denen sich Befestigungsrohre 62 für die Teilerspitzen 30 nach vorn erstrecken. Im Getriebegehäuse 42 sind in an sich bekannter und deshalb keine nähere Erläuterung erfordernder Weise Antriebsmittel zum Antrieb der Förderscheiben 24 und der Schneideinrichtung 22 vorhanden, die letztere (gleich- oder gegensinnig zu den Förderscheiben 24) in eine vorzugsweise schnellere Drehung als die Förderscheiben 24 versetzen. Die Schneideinrichtung 22 setzt sich aus einem oder mehreren in Umfangsrichtung der Schneideinrichtung 22 aufeinander folgenden Schneidmesser(n) 46 zusammen, die durch Schrauben 48 oder andere geeignete Mittel an einem am äußeren Umfang eines Halterings 44 angeordneten Flansch 56 lösbar befestigt sind. Der Haltering 44 ist in seiner Mitte mit den Antriebsmitteln im Getriebegehäuse 42 verbunden.

Die Drehachse 50 der Schneideinrichtung 22 und der Förderscheiben 24 ist in der in Figur 2 dargestellten Stellung, die die Maschine 10 im normalen Erntebetrieb einnimmt, um etwa 10° gegenüber der Vertikalen in Vorwärtsrichtung V nach vorn geneigt, so dass die Ebene, in der sich die Förderscheiben 24 und die Schneideinrichtung 22 drehen, gegenüber dem Erdboden 54 ebenfalls um 10° nach unten geneigt ist. Der Haltering 44 bildet an seinem äußeren Umfang den Flansch 56, dessen an den Schneidmessern 46 anliegenden Flächen radial zur Drehachse 50 orientiert oder, wie in der Figur 2 dargestellt, gegenüber dem Radius der Drehachse 50 geringfügig nach oben abgewinkelt sind. Die Schneidmesser 46 erstrecken sich in einer Ebene 58, die in die äußere Schneidkante 60 ausläuft, welche sich um den Umfang der Schneideinrichtung 22 erstreckt. Die Schneidmesser 46 sind konisch geformt, so dass sich die Ebene 58 vorn Flansch 56 ausgehend nach außen und oben erstreckt. Dadurch wird erreicht, dass die Ebene 58 des in Vorwärtsrichtung V vorderen Bereichs der Mäh- und Einzugseinrichtung 18 gegenüber dem Erdboden 54 in einem Winkel von etwa 5° nach vorn und oben hin ansteigt. Die rückwärtige Hälfte der Schneidmesser 46 liegt sogar in einer Ebene, die aufgrund der Neigung der Drehachse 50 noch stärker (um etwa 15°) ansteigt.

Beim Erntebetrieb werden die Pflanzen demnach durch die Schneidkante 60 vom im Boden verbleibenden Stumpf abgetrennt. Aufgrund der erfindungsgemäßen Neigung der Ebene 58 nach vorn und oben (bzw. aus dem Blickpunkt der Pflanze nach hinten und unten) kann die Pflanze nach dem Abschneiden noch auf der Ebene 58 nach unten sinken. Dadurch kann sie auch besser in den Zahngrund der Ausbuchtungen 26 eindringen. Auf diese Weise wird die Annahme der Pflanzen wesentlich verbessert.

## Patentansprüche

1. Maschine (10) zur Ernte stängelartiger Pflanzen mit einer um eine gegenüber der Vertikalen in Vorwärtsrichtung nach vorn geneigte Achse (50) in Drehung versetzbaren Schneideinrichtung (22) zum Abschneiden von Pflanzenstängeln, die einen mittels eines Antriebs um die Achse (50) in Drehung versetzbaren, mittigen Haltering (44) und wenigstens ein an einem Flansch (56) des Halterings (44) lösbar befestigtes Schneidmesser (46) umfasst, welches sich in einer in eine Schneidkante (60) auslaufenden Ebene (58) erstreckt, und mit einer über der Schneideinrichtung (22) angeordneten Fördereinrichtung zur Aufnahme und Abförderung der abgeschnittenen Pflanzenstängel, **dadurch gekennzeichnet, dass** das Schneidmesser (46) konisch geformt ist und dass sich die Ebene (58) vorn Flansch (56) ausgehend nach außen und oben erstreckt.

2. Maschine (10) nach Anspruch 1, **dadurch gekennzeichnet, dass** die Fördereinrichtung mehrere übereinander angeordnete Förderscheiben (24) mit um ihren Umfang verteilten Ausbuchtungen (26) umfasst, die mittels eines Antriebs um eine koaxial zur Achse (50) der Schneideinrichtung (22) verlaufende Achse in Drehung versetzbar sind.

## Claims

1. Machine (10) for harvesting stalk-like plants, having a cutting device (22) for cutting plant stalks, it being possible for said cutting device (22) to be set into rotation about an axis (50) that is inclined towards the front in the forward direction with respect to the vertical, and said cutting device (22) comprising a central retaining ring (44), which can be set into rotation about the axis (50) by means of a drive, and at least one cutting blade (46) which is detachably fastened to a flange (56) of the retaining ring (44) and extends in a plane (58) that ends in a cutting edge (60), said machine (10) also having a conveying device, which is arranged above the cutting device (22), for receiving and conveying away the cut plant stalks, **characterized in that** the cutting blade (46) is formed in a conical manner and **in that** the plane (58) extends outwards and upwards from the flange (56).

2. Machine (10) according to Claim 1, **characterized in that** the conveying device comprises a plurality of conveying discs (24) which have notches (26) distributed around their periphery and can be set into rotation about an axis which runs coaxially with the axis (50) of the cutting device (22), by means of a drive.

## Revendications

1. Machine (10) pour la récolte de plantes de type à tiges, comprenant un dispositif de coupe (22) pour couper des tiges de plantes, pouvant être mis en rotation autour d'un axe (50) incliné vers l'avant par rapport à la verticale dans la direction d'avance, lequel dispositif de coupe comprend un anneau de fixation central (44) pouvant être mis en rotation autour de l'axe (50) au moyen d'un entraînement, et un couteau de coupe (46) fixé de manière amovible à une bride (56) de l'anneau de fixation (44), lequel couteau s'étend dans un plan (58) se terminant par une arête de coupe (60), et comprenant un dispositif de transport disposé au-dessus du dispositif de coupe (22) pour recevoir et évacuer les tiges de plantes coupées, **caractérisée en ce que** le couteau de coupe (46) a une forme conique et **en ce que** le plan (58) s'étend vers l'extérieur et vers le haut depuis la bride (56).

2. Machine (10) selon la revendication 1, **caractérisée en ce que** le dispositif de transport comprend plusieurs disques de transport (24) disposés les uns au-dessus des autres et comprenant des indentations (26) réparties sur leur périphérie, qui peuvent être mis en rotation au moyen d'un entraînement autour d'un axe s'étendant coaxialement à l'axe (50) du dispositif de coupe (22).
